(19) **Europäisches Patentamt**

**European Patent Office**

**Office européen des brevets**

(11) **EP 1 362 725 B1**

(12) **EUROPEAN PATENT SPECIFICATION**

(45) Date of publication and mention
of the grant of the patent:
**01.03.2006 Bulletin 2006/09**

(51) Int Cl.:
***B60H 1/00*** (2006.01)

(21) Application number: **03252786.3**

(22) Date of filing: **02.05.2003**

(54) **Control device**

Steuereinrichtung

Dispositif de contrôle

(84) Designated Contracting States:
**DE FR**

(30) Priority: **15.05.2002 JP 2002139806**

(43) Date of publication of application:
**19.11.2003 Bulletin 2003/47**

(73) Proprietor: **Sanden Corporation
Isesaki-shi,
Gunma 372-8502 (JP)**

(72) Inventors:
• **Suzuki, Kenichi,
Sanden Corporation
Isesaki-shi,
Gunma 372-8502 (JP)**
• **Inoue, Atsuo,
Sanden Corporation
Isesaki-shi,
Gunma 372-8502 (JP)**
• **Sugawara, Kei,
Sanden Corporation
Isesaki-shi,
Gunma 372-8502 (JP)**

(74) Representative: **Haley, Stephen
Gill Jennings & Every LLP
Broadgate House
7 Eldon Street
London EC2M 7LH (GB)**

(56) References cited:
**EP-A- 0 621 147          EP-A- 0 820 886
US-A- 5 088 298          US-A- 5 944 256**

• **T. HEEG, A. O'DWYER: "Compensation of
Processes with Time Delay" INTERNATIONAL
POSTGRADUATE STUDENT RESEARCH
CONFERENCE, [Online] November 1997
(1997-11), XP002273625 Dublin Retrieved from
the Internet: <URL:http://www.dit.ie/DIT/
engineering/cse e/staff/aodwyer/research/files/
paper98c.do c> [retrieved on 2004-03-16]**

**Description**

The present invention relates to a control device, and, more specifically, to a control device suitable particularly for an automatic air conditioning system of an air conditioning unit for vehicles, which can maintain a performance equal to or more than that in a conventional automatic air conditioning and can greatly simplify the parts and the control system, thereby achieving an inexpensive air conditioner for vehicles.

In an air conditioning unit for vehicles having an evaporator (a cooling device) and a heater (a heating device), generally, a control amount of an air mixing damper together with the cooling device and the heating device is controlled in accordance with a set temperature, and in consideration of various feedback signals, a target blown air temperature is controlled so that a vehicle interior temperature becomes a target temperature. For example, in an automatic air conditioning, thermal load detected values such as a vehicle interior temperature, an outside air temperature, a sunshine amount, an evaporator exit air temperature, etc. are referred for the calculation of the target blown air temperature, and the respective control devices (an air mixing damper, dampers for switching blowing modes and switching a sucked air used for air conditioning between inside air and outside air, etc.) are controlled.

In such a conventional automatic air conditioning, however, since many thermal load detection devices and various temperature control device drive units are required, and many complicated control systems and equations are used, much time and cost are necessary for forming the control system for the air conditioning.

Further, there exists a case where a transient response of a blown air temperature exhibits an overshooting or an undershooting particularly at the time of changing a set temperature, and especially, if there happens an overshoot causing a high blown air temperature transiently, it may give an uncomfortable feeling to a driver. Thus, in the conventional control, because the response variation against the blown air temperature for the vehicle interior temperature is not considered, there occurs a case where the vehicle interior temperature overshoots or undershoots.

It is a purpose of the present invention to provide a control device, suitable for an air conditioning unit for vehicles, which can prevent an overshooting and an undershooting of a vehicle interior temperature and can improve the comfortableness by estimating the vehicle interior temperature in a transient state in an optimum manner, and which can achieve this by a simple and inexpensive control system.

US-A-5944256 discloses an air conditioner for a vehicle.

Accordingly, the invention resides in a control device for an air conditioning unit for vehicles, the control device including a vehicle interior temperature setting means for setting a temperature of a vehicle interior, a vehicle interior temperature detection means for detecting said temperature of said vehicle interior, a target blown air temperature calculation means for calculating a target temperature of air blown into said vehicle interior so that said temperature of said vehicle interior becomes a set temperature, a blown air temperature control means for controlling said air blown into said vehicle interior, a vehicle interior temperature target response calculation means for calculating and designating a target response in a transient state at which said temperature of said vehicle interior reaches said set temperature, and a vehicle interior temperature feedback calculation means for calculating a deviation between a target vehicle interior temperature in said target response and said vehicle interior temperature detected by said vehicle interior temperature detection means, said control device having a vehicle interior temperature estimation means for estimating a vehicle interior temperature in said transient state for reaching said set temperature based on said target response designated by said vehicle interior temperature target response calculation means, the estimation of said vehicle interior temperature in said vehicle interior temperature estimation means being carried out by an equation including time as a variable, the device being characterised in that said vehicle interior temperature estimation means is adapted to estimate said vehicle interior temperature by a plurality of first-order lag equations or equations approximated thereto, whose time constants are different from each other, the sum of the values determined from those equations constituting said target response as a vehicle interior temperature estimated value.

According to one embodiment of the invention, said vehicle interior temperature estimation means is adapted to estimate said vehicle interior temperature by two first-order lag equations or two equations approximated thereto, the sum of values determined therefrom constituting said target response as a vehicle interior temperature estimated value, a time constant in one equation being set within a range of 90 to 180 seconds, and a time constant in the other equation being set within a range of 500 to 1000 seconds.

In the above-described control device according to the present invention which is suitable for an air conditioning unit for vehicles, in accordance with a set temperature, a response model to the target value is calculated and designated, namely, the target response is automatically calculated and designated, an amount of feedforward necessary for achieving that is calculated, a control amount of feedback is added to the calculated value, and it is corrected to a more appropriate control amount. Although this feedforward control amount is calculated as a vehicle interior temperature estimated value in a transient state for reaching the set temperature by the vehicle interior temperature estimation means, this calculation is carried out by an equation including time as a variable, for example, a first-order lag equation or an equation approximated thereto. By the calculation of first-order lag or a calculation approximated thereto, a more desirable response characteristic without overshooting and undershooting is calculated, and because based on this the vehicle interior temperature is controlled, the occurrence of an overshooting or an undershooting may be prevented in an actual vehicle interior temperature. Therefore, the vehicle interior temperature may be controlled at a desirable target temperature, and a comfortable air conditioning can be achieved.

Further, because the occurrence of an overshooting and an undershooting may be prevented in the transient response of the blown air temperature, an uncomfortable feeling, which would be given at the time of occurrence of these overshooting and undershooting, may be prevented from being given to a driver, thereby maintaining a comfortable air conditioning.

In the above-described control, because basically the feedback signal is only a detection signal due to the vehicle interior temperature detection means and the control is carried out based on the feedforward control as a whole, it is not necessary to calculate and control based on many feedback signals as in the control in the conventional system. Therefore, in the control according to the present invention, by a simple control system, the vehicle interior temperature can be controlled based on the appropriate control signals. As a result, while a performance similar to the conventional automatic air conditioning is maintained or, with respect to overshooting and undershooting, a performance more excellent than that of the conventional automatic air conditioning is ensured, the control system may be greatly simplified, and accompanying therewith, a great cost down may be possible.

Further features and advantages of the present invention will be understood from the following detailed description of the preferred embodiment of the present invention with reference to the accompanying figures, of which:

Fig. 1 is a schematic diagram of an air conditioning unit for vehicles as a control device according to an embodiment of the present invention.
Fig. 2 is a block diagram showing an example of the control in the air conditioning unit depicted in Fig. 1.
Fig. 3 is a graph showing an example of the estimation of the vehicle interior temperature by the control depicted in Fig. 2.

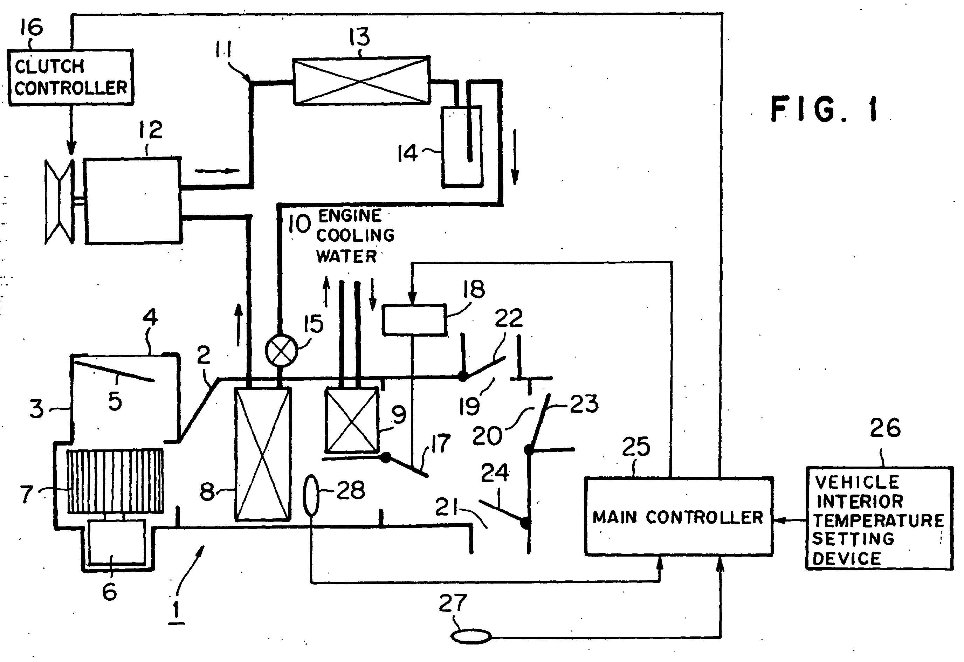

Fig. 1 shows a schematic constitution of an air conditioning unit for vehicles as a control device according to an embodiment of the present invention. In Fig. 1, label 1 shows a mechanical part of the air conditioning unit for vehicles. A switching damper 5 is provided at the entrance side of an air duct 2 for controlling the ratio of the amount of air sucked from inside air introduction port 3 to the amount of air sucked from outside air introduction port 4. The introduced air is sucked and sent into air duct 2 by blower 7 driven by motor 6. The amount of air sent by blower 7 is adjusted by controlling motor 6.

An evaporator 8 is provided as a cooler at a position downstream of blower 7, and a hot water heater 9 is provided as a heater at a position downstream thereof. Engine cooling water 10 supplied from an engine (not shown) is circulated in hot water heater 9 as the heat source of heater 9, and the sucked air is heated by hot water heater 9.

Refrigerant circulated in refrigerant circuit 11 is supplied to evaporator 8. In this embodiment, the refrigerant is compressed by a fixed displacement compressor 12 whose amount of discharge can be changed by a clutch (not shown) controlled by clutch controller 16. The compressed refrigerant is condensed by condenser 13, sent to evaporator 8 through reservoir 14 and expansion valve 15, and sucked into compressor 12 from evaporator 8. In the operation of compressor 12 in this embodiment, compressor 12 is always operated during the operation of the air conditioning via the control of clutch controller 16.

Air mixing damper 17 is provided at a position immediately downstream of hot water heater 9. A ratio of an amount of air passing through heater 9 to that bypassing the heater 9 is controlled by adjusting an opening degree of air mixing damper 17 operated by air mixing damper actuator 18.

The temperature conditioned air is sent into an interior of a vehicle through respective air discharge ports 19, 20 and 21 (for example, DEF mode air discharge port 19, VENT mode air discharge port 20 and FOOT mode air discharge port 21). Respective dampers 22, 23 and 24 are provided for the control of the opening/closing operation of respective air discharge ports 19, 20 and 21.

The above-described clutch controller for compressor 12 and the air mixing damper actuator 18 are controlled based on signals sent from main controller 25. To main controller 25, a set temperature signal from vehicle interior temperature setting device 26 and a detected signal from inside air temperature sensor 27 are inputted. Further, in this embodiment, an evaporator exit side air temperature sensor 28 is provided at the exit side of evaporator 8, and the detection signal is inputted into main controller 25.

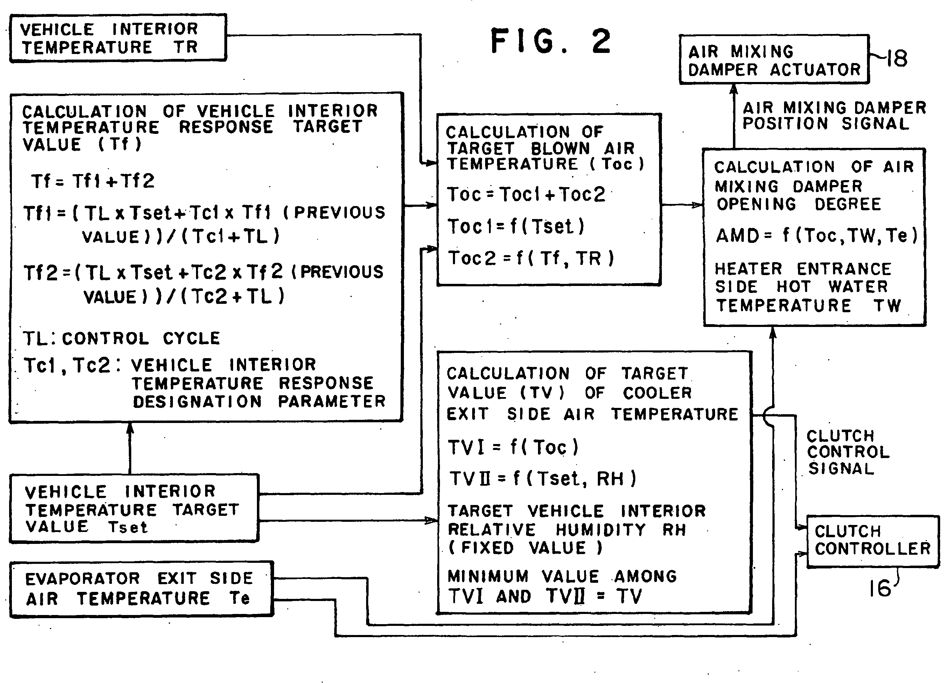

Using the above-described system, in main controller 25, the control according to the present invention is carried out, for example, as shown in Fig. 2.

In accordance with a set temperature Tset (a vehicle interior temperature target value) set by vehicle interior temperature setting device 26, a target response model Tf from a preset initial value (for example, a room temperature of 25 °C) up to reach the set temperature target value is calculated by a vehicle interior temperature target response calculation means, in this embodiment, by two vehicle interior temperature estimation models Tf1 and Tf2 considering the variation of response of the vehicle interior temperature, and by the sum of the calculated values thereof, vehicle interior temperature target response Tf is calculated as a vehicle interior temperature estimated value, as follows.

$$Tf = Tf1 + Tf2$$

$$Tf1 = (TL \times Tset + Tc1 \times Tf1\ (a\ previous\ value))/(Tc1 + TL)$$

$$Tf2 = (TL \times Tset + Tc2 \times Tf2\ (a\ previous\ value))/(Tc2 + TL)$$

Where, TL is a control cycle, and Tc1 and Tc2 are vehicle interior temperature response designation parameters. Tf1 and Tf2 are first-order lag equations.

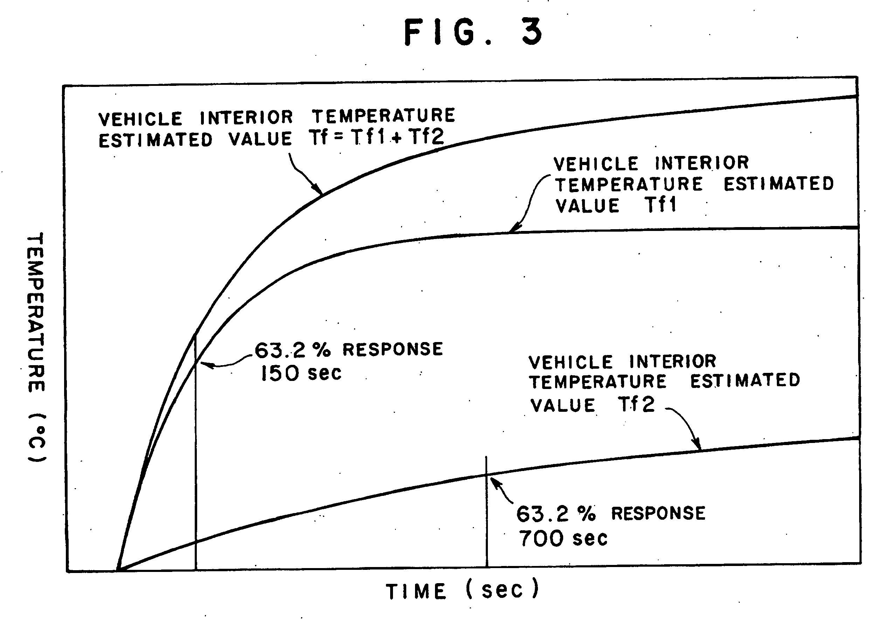

Namely, as shown in Fig. 3, the vehicle interior temperature estimated value Tf, which is a vehicle interior temperature target response, is determined as the sum of Tf1 and Tf2, and the respective vehicle interior temperature estimated value components Tf1 and Tf2 are determined as values calculated by the first-order lag equations or equations approximated thereto. In these two first-order lag equations, it is preferred that a time constant in the calculation of one equation is set within a range of 90 to 180 seconds, and a time constant in the calculation of the other equation is set within a range of 500 to 1000 seconds. In the example shown in Fig. 3, a time constant in one first-order lag calculation (calculation of Tf1) is set at 150 seconds, and a time constant in the other first-order lag calculation (calculation of Tf2) is set at 700 seconds. Where, the "time constant" means a time for reaching 63.2% response.

Thus, by calculating the vehicle interior temperature estimated value Tf as the sum of a plurality of (in the above-described example, two) vehicle interior temperature estimated value components Tf1 and Tf2 whose time constants are different from each other, a more desirable response characteristic may be obtained, and in the blown air temperature described later, ultimately, in the control of the vehicle interior temperature, occurrence of overshooting and undershooting may be prevented more surely.

Here, in a case where the vehicle interior temperature estimation means has only one first-order lag equation, it is preferred that a time constant in the calculation is set within a range of 90 to 180 seconds.

Referring to Fig. 2 again, in the calculation of a target blown air temperature Toc, a feedforward calculation value Toc1 of the target blown air temperature is determined relative to the above-described vehicle interior temperature response target value Tf. Then, a feedback calculation value Toc2 of the target blown air temperature is determined from the vehicle interior temperature response target value Tf and a vehicle interior temperature TR actually detected.

The target blown air temperature Toc is calculated from the sum of the feedforward calculation value Toc1 and feedback calculation value Toc2 of the target blown air temperature by the following equation.

$$Toc = Toc1 + Toc2$$

Based on this calculation result of the target blown air temperature Toc, an opening degree AMD of the air mixing damper is calculated by the following equation.

$$AMD = f(Toc)$$

In this embodiment, for this calculation, a heater entrance side hot water temperature TW (generally, this temperature is detected as an engine cooling water temperature) and an evaporator exit side air temperature Te are further used, and the AMD is calculated by the following equation.

$$AMD = f(Toc,\ TW,\ Te)$$

The calculated air mixing damper opening degree signal (air mixing damper position signal) AMD is outputted to air mixing damper actuator 18, and the opening degree of the air mixing damper is actually controlled.

In such a control, the target response model in accordance with the set temperature is calculated substantially as a feedforward signal, and independently therefrom, the feedback control using a detected signal from vehicle interior temperature sensor (inside air temperature sensor 27) is carried out. Therefore, the feedforward signal may be appropriately corrected by the feedback signal, and the corrected signal is determined as a control signal for controlling the blown air temperature which has a sufficiently high reliability. Moreover, because substantially only one feedback signal is the signal of the vehicle interior temperature actually detected at that time, while the control system is extremely simple, a comfortable air conditioning control may be realized at a good stability and a good response characteristic.

Further, in this embodiment, a cooler exit side air temperature TVI is calculated from the above-described target blown air temperature Toc by the following equation,

$$TV1 = f(Toc),$$

and a cooler exit side air temperature TVII is calculated from the above-described set temperature Tset by the following equation.

$$TVII = f(Tset, RH)$$

Where, RH is a target vehicle interior relative humidity, and it is given as a fixed set value. A lower temperature among TVI and TVII thus calculated is determined as a target value of the cooler exit side air temperature TV, and based on the TV, a clutch control signal is outputted to clutch controller 16. In clutch controller 16, the control is carried out so that the detected value Te of cooler exit side air temperature becomes the above-described target value TV.

Thus, by controlling clutch controller 16 based on TV, thereby controlling the operation of compressor 12, a necessary minimum operation may be carried out, and the performance for saving energy may be improved. Further, because the evaporation temperature of refrigerant can also be optimized, the comfortableness in the air conditioning may be further improved.

**Claims**

1. A control device (25) for an air conditioning unit for vehicles, the control device including a vehicle interior temperature setting means (26) for setting a temperature of a vehicle interior, a vehicle interior temperature detection means (27) for detecting said temperature of said vehicle interior, a target blown air temperature calculation means for calculating a target temperature of air blown into said vehicle interior so that said temperature of said vehicle interior becomes a set temperature ($T_{set}$), a blown air temperature control means for controlling said air blown into said vehicle interior, a vehicle interior temperature target response calculation means for calculating and designating a target response ($T_f$) in a transient state at which said temperature of said vehicle interior reaches said set temperature, and a vehicle interior temperature feedback calculation means for calculating a deviation between a target vehicle interior temperature in said target response and said vehicle interior temperature detected by said vehicle interior temperature detection means, said control device having a vehicle interior temperature estimation means for estimating a vehicle interior temperature in said transient state for reaching said set temperature based on said target response designated by said vehicle interior temperature target response calculation means, the estimation of said vehicle interior temperature in said vehicle interior temperature estimation means being carried out by an equation including time as a variable, the device being **characterised in that** said vehicle interior temperature estimation means is adapted to estimate said vehicle interior temperature by a plurality of first-order lag equations or equations approximated thereto, whose time constants are different from each other, the sum of the values ($T_{f1}$, $T_{f2}$) determined from those equations constituting said target response as a vehicle interior temperature estimated value.

2. A control device (25) according to claim 1, wherein said vehicle interior temperature estimation means is adapted to estimate said vehicle interior temperature by two first-order lag equations or two equations approximated thereto, the sum of values ($T_{f1}$, $T_{f2}$) determined therefrom constituting said target response as a vehicle interior temperature estimated value, a time constant in one equation being set within a range of 90 to 180 seconds, and a time constant in the other equation being set within a range of 500 to 1000 seconds.

**Patentansprüche**

1. Steuervorrichtung (25) für eine Klimatisierungseinheit für Fahrzeuge, wobei die Steuervorrichtung enthält:

ein Fahrzeuginnentemperatureinstellmittel (26) zum Einstellen einer Temperatur eines Fahrzeuginneren,
ein Fahrzeuginnentemperaturerfassungsmittel (27) zum Erfassen der Temperatur des Fahrzeuginneren,
ein Blasluftzieltemperaturberechnungsmittel zum Berechnen einer Zieltemperatur von Luft, die in das Fahrzeuginnere geblasen wird, so dass die Temperatur des Fahrzeuginneren eine Einstelltemperatur (Tset) wird,
ein Blaslufttemperatursteuermittel zum Steuern der in das Fahrzeuginnere geblasenen Luft,
ein Fahrzeuginnentemperaturzielantwortberechnungsmittel zum Berechnen und Bezeichnen einer Zielantwort (Tf) in einem Übergangszustand, bei dem die Temperatur des Fahrzeuginneren die Einstelltemperatur erreicht, und
ein Fahrzeuginnentemperaturrückkopplungsberechnungsmittel zum Berechnen einer Abweichung zwischen einer Fahrzeuginnenzieltemperatur in der Zielantwort und der von dem Fahrzeuginnentemperaturerfassungsmittel erfassten Fahrzeuginnentemperatur,

wobei die Steuervorrichtung ein Fahrzeuginnentemperaturabschätzmittel aufweist zum Abschätzen einer Fahrzeuginnentemperatur in dem Übergangszustand zum Erreichen der Einstelltemperatur auf der Grundlage der von dem Fahrzeuginnentemperaturzielantwortberechnungsmittel bezeichneten Zielantwort,
wobei das Abschätzen der Fahrzeuginnentemperatur in dem Fahrzeuginnentemperaturabschätzmittel durch eine Gleichung ausgeführt wird, die die Zeit als Variable enthält,
wobei die Vorrichtung **dadurch gekennzeichnet ist, dass**
das Fahrzeuginnentemperaturabschätzmittel daran angepasst ist, die Fahrzeuginnentemperatur durch eine Mehrzahl von Verzögerungsgleichungen erster Ordnung oder daran angenäherter Gleichungen, deren Zeitkonstanten voneinander verschieden sind, abzuschätzen,
wobei die Summe der Werte (Tf1, Tf2), die aus diesen Gleichungen bestimmt werden, die Zielantwort als Fahrzeuginnentemperaturschätzwert bildet.

2. Steuervorrichtung nach Anspruch 1, bei der
das Fahrzeuginnentemperaturabschätzmittel daran angepasst ist, die Fahrzeuginnentemperatur durch zwei Verzögerungsgleichungen erster Ordnung oder zwei daran angenäherte Gleichungen abzuschätzen,
wobei die Summe der Werte (Tf1, Tf2), die daraus bestimmt werden, die Zielantwort als Fahrzeuginnentemperaturschätzwert bildet,
eine Zeitkonstante in einer Gleichung in einem Bereich von 90 bis 180 Sekunden eingestellt ist und
eine Zeitkonstante in der anderen Gleichung in einem Bereich von 90 bis 180 Sekunden eingestellt ist.

**Revendications**

1. Dispositif de commande (25) d'un bloc de conditionnement d'air pour véhicules, ce dispositif de commande comprenant

- un moyen de réglage de température intérieure de véhicule (26),
- un moyen de détection de température intérieure de véhicule (27),
- un moyen de calcul de température visée de l'air soufflé à l'intérieur du véhicule, de façon que cette température devienne une température de réglage (Tset),
- un moyen de commande de température de l'air soufflé à l'intérieur du véhicule,
- un moyen de calcul de réponse de température intérieure visée du véhicule pour calculer et désigner une réponse visée (Tf) dans un état transitoire où la température intérieure atteint la température de réglage, et
- un moyen de calcul de rétroaction de température intérieure du véhicule pour calculer un écart entre une température intérieure visée dans la réponse visée, et la température intérieure détectée,

le dispositif de commande comportant un moyen d'estimation de température intérieure pour l'estimation dans l'état transitoire permettant d'atteindre la température de réglage sur la base de la réponse visée désignée par le moyen de calcul de réponse de température intérieure visée, l'estimation de la température intérieure étant effectuée par une équation incluant le temps comme variable,
**caractérisé en ce que**
le moyen d'estimation de température intérieure de véhicule est destiné à estimer la température intérieure du véhicule par une pluralité d'équations de retard du premier ordre ou d'équations approchées de celles-ci, dont les constantes de temps sont différentes les unes des autres, la somme des valeurs (Tf1, Tf2) déterminées par ces équations, constituant la réponse visée sous la forme d'une valeur de température intérieure estimée.

2. Dispositif de commande (25) selon la revendication 1,
dans lequel
le moyen d'estimation de température intérieure est destiné à estimer la température intérieure du véhicule par deux équations de retard du premier ordre ou deux équations approchées de celles-ci, la somme des valeurs (Tf1, Tf2) déterminées par ces équations, constituant la réponse visée sous la forme d'une valeur de température intérieure estimée, la constante de temps d'une équation étant réglée dans une plage de 90 à 180 secondes, et la constante de temps de l'autre équation étant réglée dans une plage de 500 à 1 000 secondes.

FIG. 1

CLUTCH CONTROLLER 16

ENGINE COOLING WATER 10

MAIN CONTROLLER 25

VEHICLE INTERIOR TEMPERATURE SETTING DEVICE 26

EP 1 362 725 B1

# FIG. 2

**VEHICLE INTERIOR TEMPERATURE TR**

**CALCULATION OF VEHICLE INTERIOR TEMPERATURE RESPONSE TARGET VALUE (Tf)**

$Tf = Tf1 + Tf2$

$Tf1 = (TL \times Tset + Tc1 \times Tf1 \text{ (PREVIOUS VALUE)})/(Tc1 + TL)$

$Tf2 = (TL \times Tset + Tc2 \times Tf2 \text{ (PREVIOUS VALUE)})/(Tc2 + TL)$

$TL$: CONTROL CYCLE

$Tc1, Tc2$: VEHICLE INTERIOR TEMPERATURE RESPONSE DESIGNATION PARAMETER

**VEHICLE INTERIOR TEMPERATURE TARGET VALUE Tset**

**EVAPORATOR EXIT SIDE AIR TEMPERATURE Te**

**CALCULATION OF TARGET BLOWN AIR TEMPERATURE (Toc)**

$Toc = Toc1 + Toc2$

$Toc1 = f(Tset)$

$Toc2 = f(Tf, TR)$

**CALCULATION OF TARGET VALUE (TV) OF COOLER EXIT SIDE AIR TEMPERATURE**

$TVI = f(Toc)$

$TVII = f(Tset, RH)$

TARGET VEHICLE INTERIOR RELATIVE HUMIDITY RH (FIXED VALUE)

MINIMUM VALUE AMONG TVI AND TVII = TV

**AIR MIXING DAMPER ACTUATOR** ~18

AIR MIXING DAMPER POSITION SIGNAL

**CALCULATION OF AIR MIXING DAMPER OPENING DEGREE**

$AMD = f(Toc, TW, Te)$

HEATER ENTRANCE SIDE HOT WATER TEMPERATURE TW

CLUTCH CONTROL SIGNAL

**CLUTCH CONTROLLER** 16

EP 1 362 725 B1

# FIG. 3

VEHICLE INTERIOR TEMPERATURE
ESTIMATED VALUE $Tf = Tf1 + Tf2$

VEHICLE INTERIOR
TEMPERATURE ESTIMATED
VALUE $Tf1$

63.2% RESPONSE
150 sec

VEHICLE INTERIOR
TEMPERATURE ESTIMATED
VALUE $Tf2$

63.2% RESPONSE
700 sec

TEMPERATURE (°C)

TIME (sec)

EP 1 362 725 B1